# EUROPEAN PATENT APPLICATION

(11) **EP 2 887 680 A1**
(43) Date of publication of application: **24.06.2015**
(21) Application number: 14192504.0
(22) Date of filing: 10.11.2014
(51) Int. Cl.: H04N 21/418, H04N 21/436, H04N 21/43, H04N 21/426, H04N 21/4385, H04N 21/4405

(54) **Digital video broadcasting system**

(30) Priority: 10.12.2013 KR 20130152889
(71) Applicant: Samsung Electronics Co., Ltd, Gyeonggi-do 443-742 (KR)
(72) Inventor: Lee, Ki Sung, Gyeonggi-do (KR); Koo, Ja Sung, Gyeonggi-do (KR); Park, Jeong Kee, Gyeonggi-do (KR); Lee, Jong Po, Gyeonggi-do (KR); Choi, Sung Il, Gyeonggi-do (KR)
(74) Representative: Appleyard Lees

(57) **Abstract**

Disclosed herein is a digital video broadcasting system. Data is serially transmitted in a section from a tuner to the subsequent component in the digital video broadcasting system. The digital video broadcasting system includes a tuner to receive digital video content signals and to serially transmit the received digital video content signals to the subsequent component, a serial-parallel converter to convert the digital video content signals serially transmitted from the tuner to parallel digital video content signals, and a conditional access module to receive the parallel digital video content signals and to descramble the parallel digital video content signals.

## Description

### BACKGROUND

### 1. Field

Embodiments of the present invention relate to a digital video broadcasting system.

### 2. Description of the Related Art

With the development of digital broadcasting (e.g. digital video broadcasting (DVB) technology), a user can receive, view and record digital video broadcast through satellite, terrestrial, cable, etc. using a digital set-top box (STB).

In general, scrambling data is inserted into content and transmitted through a satellite, for example, in order to prevent a non-subscriber from viewing corresponding broadcast in a pay broadcast service. Accordingly, a set-top box including a digital broadcast conditional access system (e.g. DVB-CI) descrambles the scrambling data and outputs the content.

Meanwhile, a picture in picture (PIP) function is provided to a set-top box at the request (e.g. simultaneous viewing of two broadcasts, simultaneous viewing of one broadcast and recording of another broadcast, etc.) of a user such that the user can record a picture of a specific broadcast while watching broadcasts.

### SUMMARY

Therefore, it is an object of the present invention to provide a digital video broadcasting system in which data is transmitted in a serial manner from a tuner to the subsequent component.

According to the present invention there is provided an apparatus and method as set forth in the appended claims. Other features of the invention will be apparent from the dependent claims, and the description which follows.

In accordance with one aspect of the present invention, a digital video broadcasting system includes: a tuner to receive digital video content signals and to serially transmit the received digital video content signals to the subsequent component; a serial-parallel converter to convert the digital video content signals serially transmitted from the tuner into parallel digital video content signals; and a conditional access module to receive the parallel digital video content signals and to descramble the parallel digital video content signals. The subsequent component as referred to herein may be the serial-parallel convertor, or may be some other component intermediate between the tuner and the serial-parallel converter, such as a decoder.

The term "system" as used herein may refer to collection of pieces of apparatus for use in receiving and displaying digital video broadcasting signals, or may refer to a method for receiving and displaying digital broadcast signals using an arrangement of pieces of apparatus.

Hence, according to an aspect of the invention there is provided a digital video broadcasting system comprising: a tuner arranged to receive digital video content signals and to serially transmit the digital video content signals to a serial-parallel converter; the serial-parallel converter being arranged to convert the digital video content signals serially transmitted from the tuner into parallel digital video content signals and to transmit these to a conditional access module; and the conditional access module being arranged to receive the parallel digital video content signals and to descramble the parallel digital video content signals.

The digital video broadcasting system may further include a decoder to decode the digital video content signals received by the tuner. The decoder may be arranged to decode the digital video content signals after transmission from the tuner and before receipt by the serial-parallel convertor.

The digital video broadcasting system may further include a television and an antenna, with a receiver provided between the antenna and the television such that communication is performed between the receiver and the antenna and between the receiver and the television, and the tuner may be included in the receiver. Hence, the digital video broadcasting system may further comprise a receiver provided between an antenna and a television such that transmission of the digital video content signals is performed between the receiver and the antenna (such as from the antenna to the receiver) and between the receiver and the television (i.e. from the receiver to the television), with the tuner included in the receiver.

The digital video broadcasting system may further include a television and an antenna, with the television directly connected to the antenna such that communication is performed between the television and the antenna, and the tuner may be included in the television. Hence, the digital video broadcasting system may further comprise a television directly connected to an antenna such that transmission of the digital video content signals is performed between the television and the antenna (i.e. from the antenna to the television), with the tuner included in the television.

A data processing speed in a section in which the digital video content signals are serially transmitted may be set to correspond to a data processing speed during parallel transmission. In other words, the serially transmitted data may be arranged to be processed at the same data processing speed as the parallel transmitted data.

A clock frequency may be increased to set the data processing speed in the section in which the digital video content signals are serially transmitted. In other words, a clock frequency may be increased to set the data processing speed in the section in which the digital video content signals are serially transmitted to correspond to the data processing speed during parallel transmission. This clock frequency will typically be the clock frequency of the section in which the digital video content signals are serially transmitted.

In accordance with another aspect of the present invention, a digital video broadcasting system includes: an antenna to receive digital video content signals; a receiver to decode the digital video content signals; and a display device to play digital video content corresponding to the decoded digital video content signals, wherein the receiver comprises a tuner to serially transmit the received digital video content signals to the subsequent component and a serial-parallel converter to convert the digital video content signals serially transmitted from the tuner to parallel digital video content signals and to transmit the parallel digital video content signals to a conditional access module. The conditional access module may be arranged to receive the parallel digital video content signals and to descramble the parallel digital video content signals for subsequent display.

The receiver may further include a decoder to decode the digital video content signals received by the tuner. This decoder may be arranged between the receiver and the serial-parallel convertor.

A data processing speed in a section in which the digital video content signals are serially transmitted may be set to correspond to a data processing speed during parallel transmission, for instance so that the serially transmitted data may be arranged to be processed at the same data processing speed as the parallel transmitted data. A clock frequency may be increased to set the data processing speed in the section in which the digital video content signals are serially transmitted. This clock frequency may be increased to set the data processing speed in the section in which the digital video content signals are serially transmitted to correspond to the data processing speed during parallel transmission.

In accordance with another aspect of the present invention, a digital video broadcasting system includes: an antenna to receive digital video content signals; a display device to decode the digital video content signals and to play digital video content corresponding to the decoded digital video content signals, wherein the display device includes a tuner to serially transmit the received digital video content signals to the subsequent component and a serial-parallel converter to convert the digital video content signals serially transmitted from the tuner to parallel digital video content signals and to transmit the parallel digital video content signals to a conditional access module. The conditional access module may be arranged to receive the parallel digital video content signals and to descramble the parallel digital video content signals for subsequent display.

The display device may further include a decoder to decode the digital video content signals received by the tuner. This decoder may be arranged between the receiver and the serial-parallel convertor.

A data processing speed in a section in which the digital video content signals are serially transmitted may be set to correspond to a data processing speed during parallel transmission, for instance so that the serially transmitted data may be arranged to be processed at the same data processing speed as the parallel transmitted data.

A clock frequency may be increased to set the data processing speed in the section in which the digital video content signals are serially transmitted. This clock frequency may be increased to set the data processing speed in the section in which the digital video content signals are serially transmitted to correspond to the data processing speed during parallel transmission.

According to one aspect of the present invention, since data is serially transmitted from a tuner to the subsequent components in a digital video broadcasting system, a signal transmission path from the tuner to the subsequent component is simplified as compared to parallel signal transmission paths, and thus circuit design is facilitated and simplified. Furthermore, simplification of the signal transmission path can reduce circuit board size and make better use of a circuit board even when the circuit board is not reduced in size. In addition, since a switch for switching between a state in which a conditional access module is inserted into a slot and a state in which the conditional access module is not inserted into the slot need not be provided to the signal transmission path, the number of components can be reduced and manufacturing process can be simplified.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a view illustrating a digital video broadcasting system according to an embodiment of the present invention;
FIG. 2 is a view illustrating a signal transmission flow of the digital video broadcasting system shown in FIG. 1;
FIG. 3 is a view illustrating another signal transmission flow of the digital video broadcasting system shown in FIG. 1;
FIG. 4 is a view illustrating a digital video broadcasting system according to another embodiment of the present invention;
FIG. 5 is a view illustrating a signal transmission flow of the digital video broadcasting system shown in FIG. 4; and
FIG. 6 is a view illustrating another signal transmission flow of the digital video broadcasting system shown in FIG. 4.

### DETAILED DESCRIPTION

Reference will now be made in detail to the embodiments of the present invention, examples of which are illustrated in the accompanying drawings, wherein like reference numerals refer to like elements throughout.

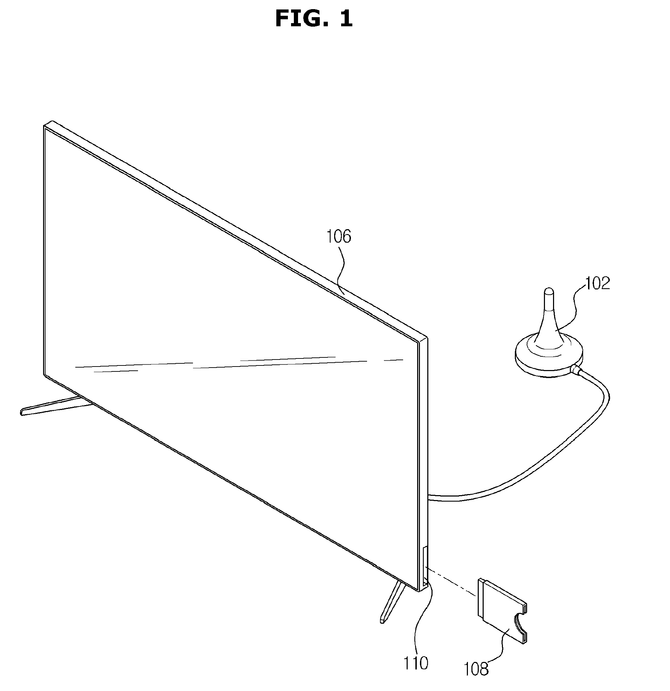

FIG. 1 is a view illustrating a digital video broadcasting system according to an embodiment of the present invention. As shown in FIG. 1, the digital video broadcasting system according to an embodiment of the present invention includes an antenna 102 and a television (TV) 106 as a display directly connected to the antenna 102. The TV 106 has a slot 110 into which a conditional access module (CAM) 108 is inserted.

Conditional access (or scrambling) refers to encoding or encryption of digital video content through an appropriate method to prevent non-subscribers from viewing the digital video content. Conditional access release (or descrambling) refers to returning of scrambled digital video content to unscrambled state to permit subscribers to watch the digital video content.

The antenna 102 receives digital video content signals provided by a digital video content provider. Digital video content may conform to DVB (digital video broadcasting). A content signal transmission scheme may be DVB-T in which a content signal is transmitted through terrestrial waves from a broadcasting station, DVB-C in which a content signal is transmitted from a cable content provider or DVB-S in which a content signal is transmitted through a satellite.

The content signals received through the antenna 102 are transmitted in the form of radio frequency signals to the TV 106. The TV includes a receiver having a tuner. The tuner of the receiver selects only signals in a required frequency band from the RF signals transmitted from the antenna 102. The receiver decodes the selected signals to generate transport streams and produces a video signal and an audio signal from the transport streams. The video signal and audio signal are reproduced as images and sound by a controller of the TV 106.

Digital content received through the antenna 102 may be scrambled content or unscrambled content. When the digital content is scrambled content, only a permitted user can view the content. Scrambled content is descrambled by the CAM 108. The CAM 108 takes the form of a card satisfying PCMCIA and is enabled by being inserted into the slot 110 of the TV 106. The CAM 108 descrambles scrambled content permitted to be watched by a user from among the transport streams generated by the receiver included in the TV 106. For example, when a user's contract for usage of digital content includes the authority to watch sports channels, the authority to watch sports channel is recorded in the CAM 108 and thus the CAM 108 descrambles scrambled sports content upon reception of the sports content such that the user can watch the sports content through the TV 106. If the sports content is unscrambled digital content, then a descrambling process is not needed.

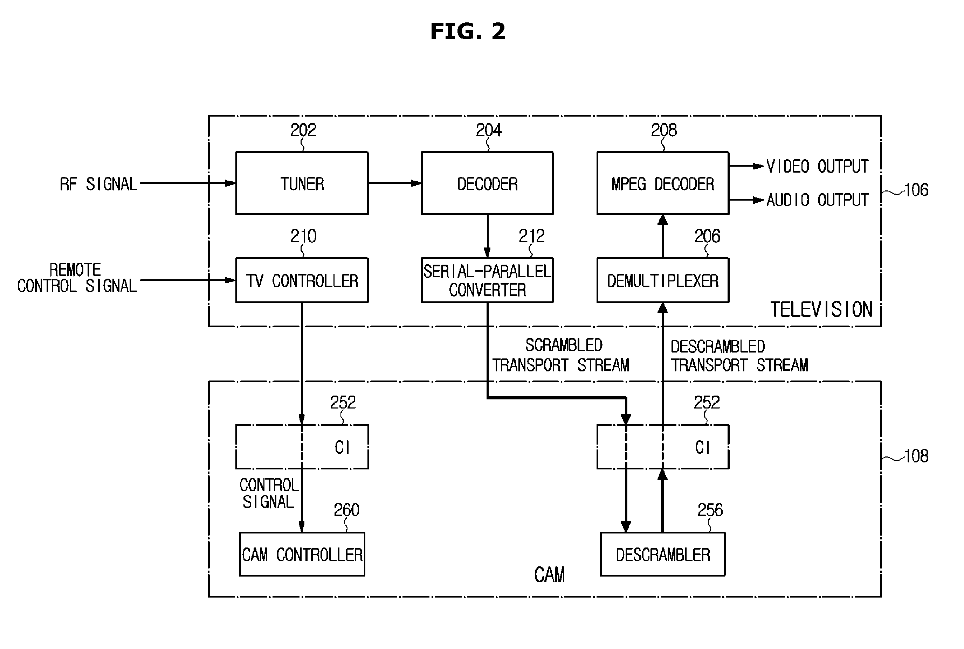

FIG. 2 is a view illustrating a signal transmission flow of the digital video broadcasting system shown in FIG. 1. In FIG. 2, the CAM 108 is connected to the TV 106 such that communication can be performed between the CAM 108 and the TV 106 by being inserted into the slot 110 shown in FIG. 1.

As shown in FIG. 2, the TV 106 includes the tuner 202, a decoder 204, a demultiplexer 206, an MPEG decoder 208, a TV controller 210, a serial-parallel converter 212. The CAM 108 includes a common interface 252, a descrambler 256 and a CAM controller 260. The TV 106 and the CAM 108 are connected to each other through the common interface 252 such that communication can be performed between the TV 106 and the CAM 108. The TV controller 210 controls overall operation of the TV 106 and the CAM controller 260 controls overall operation of the CAM 108. Particularly, the TV controller 210 receives a remote control signal generated by operation of a remote controller by a user to control operation of the TV 106 or transmits the remote control signal to the CAM controller 260 through the common interface 252. The CAM controller 260 receives a control signal transmitted from the TV 106 to control the CAM 108 to perform corresponding operation.

The tuner 202 included in the TV 106 selects only signals corresponding to a required frequency band from RF signals transmitted from the antenna 102. The decoder 204 decodes the signals (encoded) selected by the tuner 202. In the digital video broadcasting system according to an embodiment of the present invention, the encoded signals selected by the tuner 202 are transmitted in a serial manner to the subsequent component. For example, as shown in FIG. 2, the encoded signals of the frequency band selected by the tuner 202 are serially transmitted to the decoder 204 and the signals decoded by the decoder 204 are serially transmitted to the serial-parallel converter 254. In the case of a structure in which the encoded signals of the frequency band selected by the tuner 202 are directly transmitted to the CAM 108 without passing through the decoder 204, differently from the structure of FIG. 2, the signals are serially transmitted from the tuner 202 to the serial-parallel converter 254 of the CAM 108. Otherwise, in the case of a structure in which the encoded signals of the frequency band selected by the tuner 202 are transmitted to the CAM 108 via the TV controller 210, differently from the structure of FIG. 2, the signals are serially transmitted from the tuner 202 to the TV controller 210.

When the encoded signals of the frequency band selected by the tuner 202 are transmitted to the subsequent component in a serial manner, as described above, a signal transmission path from the tuner 202 to the subsequent component is simplified as compared to parallel signal transmission paths, and thus circuit design is facilitated. Furthermore, simplification of the signal transmission path can reduce circuit board size and make better use of a circuit board even when the circuit board is not reduced in size. In addition, since a switch for switching between a state in which the CAM 108 is inserted into the slot 110 and a state in which the CAM 108 is not inserted into the slot 110 need not be provided to the signal transmission path, the number of components can be reduced and manufacturing process can be simplified.

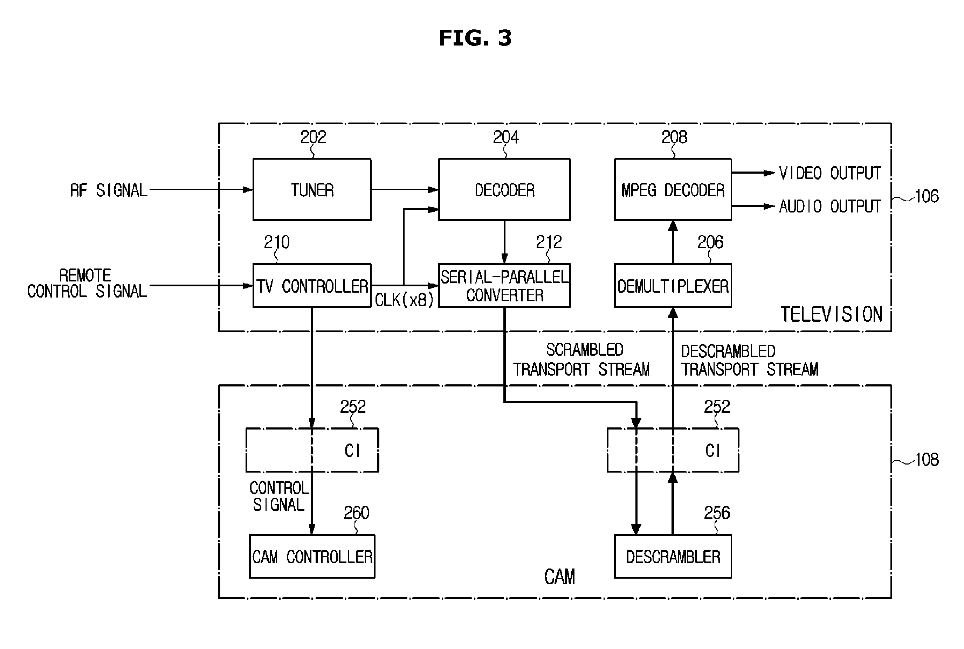

FIG. 3 is a view illustrating another signal transmission flow of the digital video broadcasting system shown in FIG. 1. In FIG. 3, the CAM 108 is connected to the TV 106 such that communication can be performed between the CAM 108 and the TV 106 by being inserted into the slot 110 shown in FIG. 1.

As shown in FIG. 3, the TV 106 includes the tuner 202, the decoder 204, the demultiplexer 206, the MPEG decoder 208, the TV controller 210, and the serial-parallel converter 212. The CAM 108 includes a common interface 252, a descrambler 256 and a CAM controller 260. The TV 106 and the CAM 108 are connected to each other through the common interface 252 such that communication can be performed between the TV 106 and the CAM 108. The TV controller 210 controls overall operation of the TV 106 and the CAM controller 260 controls overall operation of the CAM 108. Particularly, the TV controller 210 receives a remote control signal generated by operation of a remote controller by a user to control operation of the TV 106 or transmits the remote control signal to the CAM controller 260 through the common interface 252. The CAM controller 260 receives a control signal transmitted from the TV 106 to control the CAM 108 to perform corresponding operation.

The tuner 202 included in the TV 106 selects only signals corresponding to a required frequency band from RF signals transmitted from the antenna 102. The decoder 204 decodes the signals (encoded) selected by the tuner 202. In the digital video broadcasting system according to an embodiment of the present invention, the encoded signals selected by the tuner 202 are transmitted in a serial manner to the subsequent component. For example, as shown in FIG. 2, the encoded signals of the frequency band selected by the tuner 202 are serially transmitted to the decoder 204 and the signals decoded by the decoder 204 are serially transmitted to the serial-parallel converter 254. In the case of a structure in which the encoded signals of the frequency band selected by the tuner 202 are directly transmitted to the CAM 108 without passing through the decoder 204, differently from the structure of FIG. 2, the signals are serially transmitted from the tuner 202 to the serial-parallel converter 254 of the CAM 108. Otherwise, in the case of a structure in which the encoded signals of the frequency band selected by the tuner 202 are transmitted to the CAM 108 via the TV controller 210, differently from the structure of FIG. 2, the signals are serially transmitted from the tuner 202 to the TV controller 210.

In the TV 106 shown in FIG. 3, the TV controller 210 generates a clock signal CLK with an increased frequency and applies the clock signal CLK to the decoder 204 and the serial-parallel converter 212 such that decoding operation of the decoder 204 and serial-to-parallel conversion operation of the serial-parallel converter 212 can be performed more rapidly. Here, frequency increase of the clock signal CLK means increase of the frequency of the clock signal CLK as compared to a case in which the encoded signal of the frequency band selected by the tuner 202 is transmitted in a parallel manner to the subsequent component. For example, when a parallel transmission scheme by which signals are transmitted in the form of 8-bit parallel signals is changed to the serial transmission scheme according to the present invention, the frequency of the clock signal CLK may be increased eight times to maintain a transmission rate of parallel transmission. If the frequency of the clock signal CLK is further increased, then a higher transmission rate may be achieved.

When the encoded signals of the frequency band selected by the tuner 202 are transmitted to the subsequent component in a serial manner, as described above, a signal transmission path from the tuner 202 to the subsequent component is simplified as compared to parallel signal transmission paths, and thus circuit design is facilitated. Furthermore, simplification of the signal transmission path can reduce circuit board size and make better use of a circuit board even when the circuit board is not reduced in size. In addition, since a switch for switching between a state in which the CAM 108 is inserted into the slot 110 and a state in which the CAM 108 is not inserted into the slot 110 need not be provided to the signal transmission path, the number of components can be reduced and manufacturing process can be simplified.

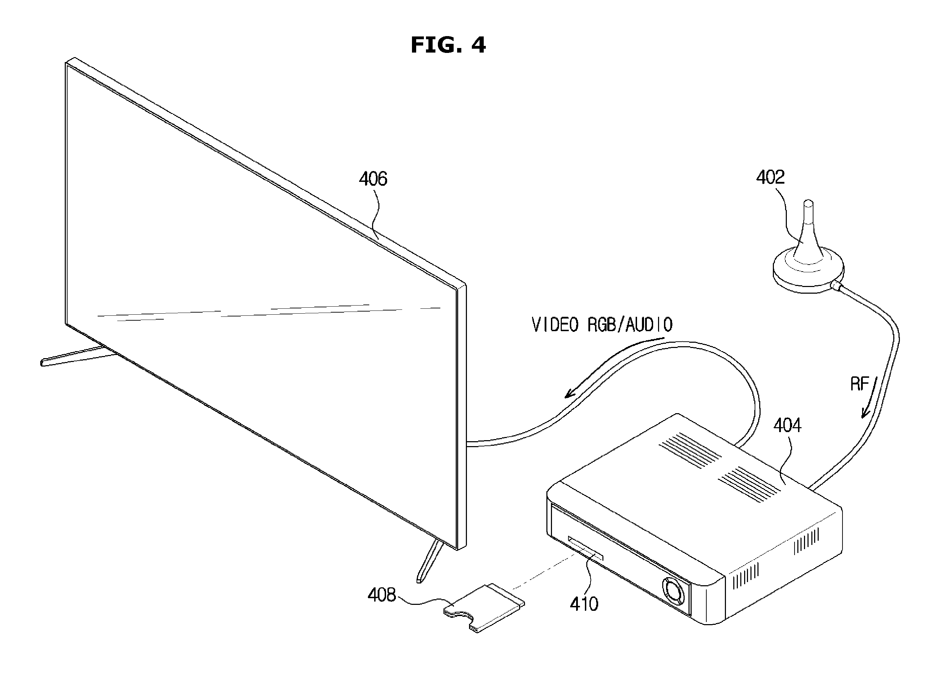

FIG. 4 is a view illustrating a digital video broadcasting system according to another embodiment of the present invention. As shown in FIG. 4, the digital video broadcasting system according to an embodiment of the present invention may include an antenna 402, a receiver 404, a TV 406 as a display and a CAM 408.

Conditional access (or scrambling) refers to encoding or encryption of digital video content through an appropriate method to prevent non-subscribers from viewing the digital video content. Conditional access release (or descrambling) refers to returning of scrambled digital video content to unscrambled state to permit subscribers to watch the digital video content.

The antenna 402 receives digital video content signals provided by a digital video content provider. Digital video content may conform to DVB (digital video broadcasting). A content signal transmission scheme may be DVB-T in which a content signal is transmitted through terrestrial waves from a broadcasting station, DVB-C in which a content signal is transmitted from a cable content provider or DVB-S in which a content signal is transmitted through a satellite.

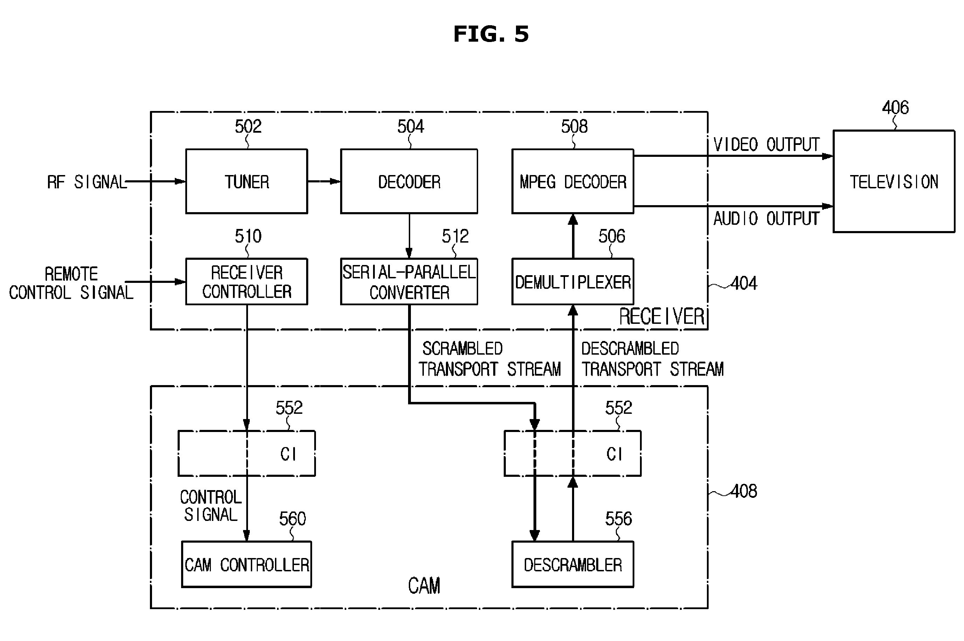

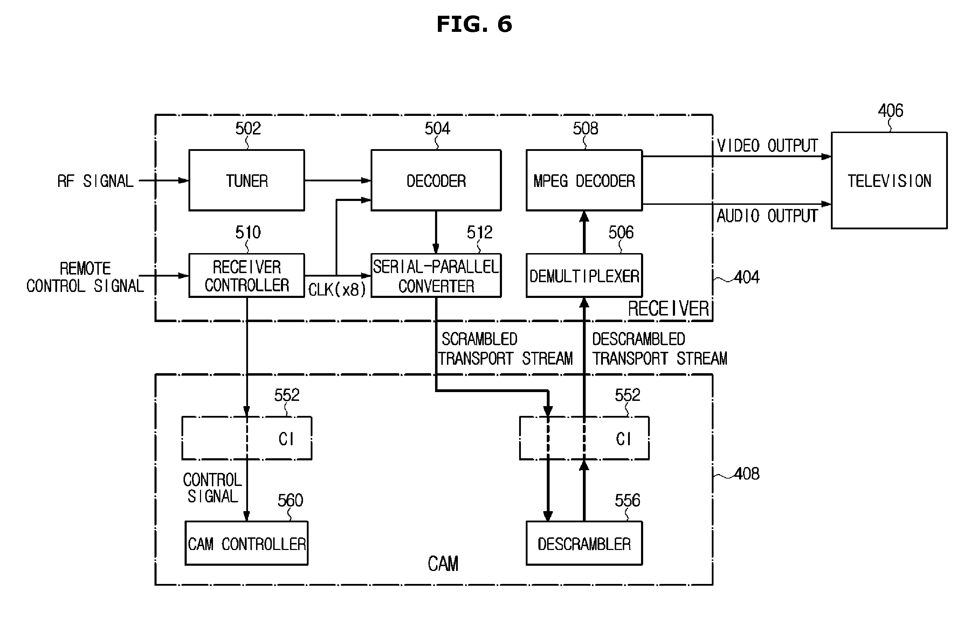

The content signals received through the antenna 402 are transmitted in the form of radio frequency signals to the receiver 404. The receiver 404 includes a tuner (refer to 502 of FIGS. 5 and 6). The tuner 502 selects only signals in a required frequency band from the RF signals transmitted from the antenna 402. The receiver 404 decodes the selected signals to generate transport streams, produces a video signal and an audio signal from the transport streams and outputs the video signal and the audio signal to the TV 406.

Digital content received through the antenna 402 may be scrambled content or unscrambled content. When the digital content is scrambled content, only a permitted user can view the content. Scrambled content is descrambled by the CAM 408. The CAM 408 takes the form of a card satisfying PCMCIA and is enabled by being inserted into a card slot 410 provided to the receiver 404. The CAM 408 descrambles scrambled content permitted to be watched by a user from among the transport streams generated by the receiver 404. For example, when a user's contract for usage of digital content includes the authority to watch sports channels, the authority to watch sports channel is recorded in the CAM 408 and thus the CAM 408 descrambles scrambled sports content upon reception of the sports content such that the user can watch the sports content through the TV 406. If the sports content is unscrambled digital content, then a descrambling process is not needed.

FIG. 5 is a view illustrating a signal transmission flow of the digital video broadcasting system shown in FIG. 4. In FIG. 5, the CAM 408 is connected to the receiver 404 such that communication can be performed between the CAM 408 and the receiver 404 by being inserted into the slot 410 shown in FIG. 4.

As shown in FIG. 5, the receiver 404 includes the tuner 502, a decoder 504, a demultiplexer 506, an MPEG decoder 508, a receiver controller 510, and a serial-parallel converter 512. The CAM 408 includes a common interface 552, a descrambler 556 and a CAM controller 560. The receiver 404 and the CAM 408 are connected to each other through the common interface 552 such that communication can be performed between the receiver 404 and the CAM 408. The receiver controller 510 controls overall operation of the receiver 404 and the CAM controller 560 controls overall operation of the CAM 408. Particularly, the receiver controller 510 receives a remote control signal generated by operation of a remote controller by a user to control operation of the receiver 404 or transmits the remote control signal to the CAM controller 560 through the common interface 552. The CAM controller 560 receives a control signal transmitted from the receiver 404 to control the CAM 408 to perform corresponding operation.

The tuner 502 included in the receiver 404 selects only signals corresponding to a required frequency band from RF signals transmitted from the antenna 402. The decoder 504 decodes the signals (encoded) selected by the tuner 502. In the digital video broadcasting system according to the present embodiment of the invention, the encoded signals selected by the tuner 502 are transmitted in a serial manner to the subsequent component. For example, as shown in FIG. 5, the encoded signals of the frequency band selected by the tuner 502 are serially transmitted to the decoder 504 and the signals decoded by the decoder 504 are serially transmitted to the serial-parallel converter 554. In the case of a structure in which the encoded signals of the frequency band selected by the tuner 502 are directly transmitted to the CAM 408 without passing through the decoder 504, differently from the structure of FIG. 5, the signals are serially transmitted from the tuner 502 to the serial-parallel converter 554 of the CAM 408. Otherwise, in the case of a structure in which the encoded signals of the frequency band selected by the tuner 502 are transmitted to the CAM 408 via the receiver controller 510, differently from the structure of FIG. 5, the signals are serially transmitted from the tuner 502 to the receiver controller 510.

When the encoded signals of the frequency band selected by the tuner 502 are transmitted to the subsequent component in a serial manner, as described above, a signal transmission path from the tuner 502 to the subsequent component is simplified as compared to parallel signal transmission paths, and thus circuit design is facilitated. Furthermore, simplification of the signal transmission path can reduce circuit board size and make better use of a circuit board even when the circuit board is not reduced in size. In addition, since a switch for switching between a state in which the CAM 408 is inserted into the slot 410 and a state in which the CAM 408 is not inserted into the slot 410 need not be provided to the signal transmission path, the number of components can be reduced and manufacturing process can be simplified.

FIG. 6 is a view illustrating another signal transmission flow of the digital video broadcasting system shown in FIG. 4. In FIG. 6, the CAM 408 is connected to the receiver 404 such that communication can be performed between the CAM 408 and the receiver 404 by being inserted into the slot 410 shown in FIG. 4.

As shown in FIG. 6, the receiver 404 includes the tuner 502, the decoder 504, the demultiplexer 506, the MPEG decoder 508, the receiver controller 510, and the serial-parallel converter 512. The CAM 408 includes the common interface 552, the descrambler 556 and the CAM controller 560. The receiver 404 and the CAM 408 are connected to each other through the common interface 552 such that communication can be performed between the receiver 404 and the CAM 408. The receiver controller 510 controls overall operation of the receiver 404 and the CAM controller 560 controls overall operation of the CAM 408. Particularly, the receiver controller 510 receives a remote control signal generated by operation of a remote controller by a user to control operation of the receiver 404 or transmits the remote control signal to the CAM controller 560 through the common interface 552. The CAM controller 560 receives a control signal transmitted from the receiver 404 to control the CAM 408 to perform corresponding operation.

The tuner 502 included in the receiver 404 selects only signals corresponding to a required frequency band from RF signals transmitted from the antenna 402. The decoder 504 decodes the signals (encoded) selected by the tuner 502. In the digital video broadcasting system according to the present embodiment of the invention, the encoded signals selected by the tuner 502 are transmitted in a serial manner to the subsequent component. For example, as shown in FIG. 6, the encoded signals of the frequency band selected by the tuner 502 are serially transmitted to the decoder 504 and the signals decoded by the decoder 504 are serially transmitted to the serial-parallel converter 554. In the case of a structure in which the encoded signals of the frequency band selected by the tuner 502 are directly transmitted to the CAM 408 without passing through the decoder 504, differently from the structure of FIG. 6, the signals are serially transmitted from the tuner 502 to the serial-parallel converter 554 of the CAM 408. Otherwise, in the case of a structure in which the encoded signals of the frequency band selected by the tuner 502 are transmitted to the CAM 408 via the receiver controller 510, differently from the structure of FIG. 6, the signals are serially transmitted from the tuner 502 to the receiver controller 510.

In the receiver 404 shown in FIG. 6, the receiver controller 510 generates a clock signal CLK with an increased frequency and applies the clock signal CLK to the decoder 504 and the serial-parallel converter 512 such that decoding operation of the decoder 504 and serial-to-parallel conversion operation of the serial-parallel converter 512 can be performed more rapidly. Here, frequency increase of the clock signal CLK means increase of the frequency of the clock signal CLK as compared to a case in which the encoded signal of the frequency band selected by the tuner 502 is transmitted in a parallel manner to the subsequent component. For example, when a parallel transmission scheme by which signals are transmitted in the form of 8-bit parallel signals is changed to the serial transmission scheme according to the present invention, the frequency of the clock signal CLK may be increased eight times to maintain a transmission rate of parallel transmission. If the frequency of the clock signal CLK is further increased, then a higher transmission rate may be achieved.

When the encoded signals of the frequency band selected by the tuner 502 are transmitted to the subsequent component in a serial manner, as described above, a signal transmission path from the tuner 502 to the subsequent component is simplified as compared to parallel signal transmission paths, and thus circuit design is facilitated. Furthermore, simplification of the signal transmission path can reduce circuit board size and make better use of a circuit board even when the circuit board is not reduced in size. In addition, since a switch for switching between a state in which the CAM 408 is inserted into the slot 410 and a state in which the CAM 408 is not inserted into the slot 410 need not be provided to the signal transmission path, the number of components can be reduced and manufacturing process can be simplified.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A digital video broadcasting system comprising:
a tuner (202, 502) to receive digital video content signals and to serially transmit the received digital video content signals to the subsequent component;
a serial-parallel converter (212, 512) to convert the digital video content signals serially transmitted from the tuner into parallel digital video content signals; and
a conditional access module (108, 408) to receive the parallel digital video content signals and to descramble the parallel digital video content signals.

2. The digital video broadcasting system according to claim 1, further comprising a decoder (204) to decode the digital video content signals received by the tuner.

3. The digital video broadcasting system according to claim 1 or claim 2, further comprising a receiver (404) provided between an antenna (402) and a television (406) such that communication is performed between the receiver (404) and the antenna (402) and between the receiver (404) and the television (406),
wherein the tuner (502) is included in the receiver (404).

4. The digital video broadcasting system according to claim 1 or claim 2, further comprising a television (106) directly connected to an antenna (102) such that communication is performed between the television (106) and the antenna (102),
wherein the tuner (202) is included in the television (106).

5. The digital video broadcasting system according to any preceding claim, wherein a data processing speed in a section in which the digital video content signals are serially transmitted is set to correspond to a data processing speed during parallel transmission.

6. The digital video broadcasting system according to claim 5, wherein a clock frequency is increased to set the data processing speed in the section in which the digital video content signals are serially transmitted.

7. A digital video broadcasting system comprising:
an antenna (402) to receive digital video content signals;
a receiver (404) to decode the digital video content signals; and
a display device (406) to play digital video content corresponding to the decoded digital video content signals,
wherein the receiver (404) comprises:
a tuner (502) to serially transmit the received digital video content signals to the subsequent component; and
a serial-parallel converter (512) to convert the digital video content signals serially transmitted from the tuner (502) to parallel digital video content signals and to transmit the parallel digital video content signals to a conditional access module (408).

8. The digital video broadcasting system according to claim 7, wherein the receiver (404) further comprises a decoder (504) to decode the digital video content signals received by the tuner (502).

9. The digital video broadcasting system according to claim 7 or claim 8, wherein a data processing speed in a section in which the digital video content signals are serially transmitted is set to correspond to a data processing speed during parallel transmission.

10. The digital video broadcasting system according to claim 9, wherein a clock frequency is increased to set the data processing speed in the section in which the digital video content signals are serially transmitted.

11. A digital video broadcasting system comprising:
an antenna (102) to receive digital video content signals;
a display device (106) to decode the digital video content signals and to play digital video content corresponding to the decoded digital video content signals,
wherein the display device (106) comprises:
a tuner (202) to serially transmit the received digital video content signals to the subsequent component; and
a serial-parallel converter (212) to convert the digital video content signals serially transmitted from the tuner (202) to parallel digital video content signals and to transmit the parallel digital video content signals to a conditional access module (108).

12. The digital video broadcasting system according to claim 11, wherein the display device (106) further comprises a decoder (204) to decode the digital video content signals received by the tuner (202).

13. The digital video broadcasting system according to claim 11 or claim 12, wherein a data processing speed in a section in which the digital video content signals are serially transmitted is set to correspond to a data processing speed during parallel transmission.

14. The digital video broadcasting system according to claim 13, wherein a clock frequency is increased to set the data processing speed in the section in which the digital video content signals are serially transmitted.
